# FASCICULE DE BREVET EUROPEEN

(11) **EP 2 082 253 B1**
(45) Date de publication et mention de la délivrance du brevet: **31.03.2010**
(21) Numéro de dépôt: 07858645.0
(22) Date de dépôt: 22.10.2007
(51) Int. Cl.: G01S 5/02

(54) **PROCEDE ET DISPOSITIF D'ESTIMATION D'UNE TRAJECTOIRE DECRITE PAR UN VEHICULE**
VERFAHREN UND EINRICHTUNG ZUR SCHÄTZUNG EINER VON EINEM FAHRZEUG BESCHRIEBENEN TRAJEKTORIE
METHOD AND DEVICE FOR ESTIMATING A TRAJECTORY DESCRIBED BY A VEHICLE

(30) Priorité: 24.10.2006 FR 0654488
(43) Date de publication de la demande: 29.07.2009
(73) Titulaire: FRANCE TELECOM, 75015 Paris (FR)
(72) Inventeur: LAUGIER, Alexandre, 06440 Peille (FR); PARIS, Jean-Pierre, 06270 Villeneuve-loubet (FR); PICARD, Michel, 06560 Valbonne (FR)
(86) Numéro de dépôt international: PCT/FR2007/052225
(87) Numéro de publication internationale: WO 2008/050056

(56) Documents cités:
- US-A- 5 337 243
- US-A1- 2004 230 373

## Description

L'invention concerne le domaine technique général de la localisation et du suivi d'entités mobiles. Elle concerne plus particulièrement un procédé et dispositif d'estimation d'une trajectoire décrite par un objet mobile, notamment un véhicule.

Une solution connue de localisation est celle développée par la société Quantic™ pour les véhicules automobiles. Cette solution repose sur l'utilisation des informations de vitesse et de caps fournies par le système GPS (Global Positionning System) pour effectuer le suivi d'un véhicule automobile et déterminer différents paramètres de la trajectoire suivie par cette entité.

La méthode de détermination procède à une intégration de la mesure de vitesse fournie par le GPS afin d'approcher la trajectoire de l'entité en mouvement. Elle est relativement complexe à mettre en oeuvre. Elle ne peut être mise en oeuvre dans un dispositif à faible ressource tel qu'un téléphone mobile.

En outre, la méthode de détermination de la trajectoire utilisée dans cette solution est tributaire des informations fournies par le GPS, les changements de direction n'étant par exemple détectés que grâce aux informations de cap fournies. Cette méthode d'approximation de trajectoire n'est donc pas applicable dans le cas où l'information fournie est une simple information de position.

Il apparaît donc un besoin de fournir une solution simple de suivi d'une entité mobile, permettant d'approximer la trajectoire suivie par cette entité à partir de positions géographiques successivement occupées par cette entité et susceptible d'être mise en oeuvre dans dispositif à faibles ressources en calcul et/ou en mémoire tel qu'un téléphone mobile.

L'invention concerne un procédé d'estimation d'une trajectoire décrite par un objet mobile, à partir d'une succession de positions géographiques obtenues pour ledit objet, le procédé comprenant,
- une étape de détermination d'une valeur de vitesse de déplacement dudit objet à partir d'une position courante et d'une position précédente,
- une étape de détermination d'une droite courante qui est, selon la valeur de vitesse déterminée, soit une première droite définie par ladite position courante et ladite position précédente, soit une deuxième droite obtenue par approximation linéaire d'un ensemble comprenant au moins deux positions dont ladite position courante et une position précédente.
   Le procédé permet d'approximer de manière simple, notamment au moyen d'un ensemble de droites, la trajectoire de l'objet à suivre, et ce uniquement à partir de positions géographiques obtenues pour l'objet mobile. Les techniques d'approximation linéaires d'un ensemble de points sont en effet simples à mettre en oeuvre. La trajectoire peut ensuite être reconstituée à partir de segments de droite appartenant aux droites déterminées.
   En outre, l'approximation de la trajectoire par des droites s'opère, pour un point donné de la trajectoire, en tenant compte de la vitesse de l'objet à ce point de la trajectoire. La méthode d'approximation selon l'invention repose en effet sur la constatation que plus un véhicule roule lentement, et plus la trajectoire qu'il effectue est susceptible de comporter des changements de direction rapides et/ou amples. Selon l'invention, la droite courante choisie pour l'approximation de la trajectoire au point courant, et donc le mode d'approximation pour ce point, est fonction de la vitesse de l'objet. Il est donc possible simplement d'adapter la précision de l'approximation à la sinuosité possible de la trajectoire de l'objet.
   Selon un mode de réalisation du procédé selon l'invention, lorsque la valeur de vitesse déterminée est supérieure à un premier seuil de vitesse, le procédé comprend une étape de détermination d'une valeur d'angle associée à la valeur de vitesse et d'une différence d'angle de pente entre la première et la deuxième droite, la droite courante correspondant à la deuxième droite lorsque ladite différence est inférieure à la valeur d'angle déterminée et à la première droite lorsque ladite différence est supérieure à la valeur d'angle associée.
   Il est ainsi possible de déterminer, en fonction de la sinuosité réelle de la trajectoire, quel est le mode d'approximation le plus approprié.
   Selon un mode de réalisation, le procédé selon l'invention comprend une étape initiale de mémorisation d'une échelle de valeurs de seuil de vitesse de déplacement dudit objet et d'une valeur d'angle associée à chaque intervalle de valeurs de vitesse séparant deux valeurs de seuil successives, la valeur d'angle déterminée étant constituée par la valeur d'angle associée à l'intervalle de valeurs de seuil dans lequel se trouve la valeur de vitesse déterminée. De cette manière, la sinuosité réelle de la trajectoire peut être comparée avec un à la vitesse de la trajectoire afin de déterminer quelle est la droite la plus appropriée pour l'approximation de la trajectoire. Il s'en suit que la précision des calculs, et donc les ressources en calcul nécessaires, est adaptée aux caractéristiques réelles de la trajectoire. Le rapport précision / coût est amélioré.
   Selon un mode de réalisation du procédé selon l'invention, lorsque la valeur de vitesse déterminée est inférieure au premier seuil de vitesse, la droite courante est la première droite.
   Selon un mode de réalisation du procédé selon l'invention, les positions géographiques obtenues pou l'objet mobile sont déduites des positions géographiques d'un terminal mobile de télécommunication fournies par un réseau de télécommunication auquel accède ledit terminal. Ce mode de réalisation convient donc particulièrement à une mise en oeuvre peu coûteuse de l'invention.
   En corollaire, l'invention concerne un dispositif d'estimation d'une trajectoire décrite par un objet, à partir d'une succession de positions géographiques obtenues pour ledit objet, le dispositif comprenant,
- des moyens de détermination d'une valeur de vitesse de déplacement dudit objet à partir d'une position courante et d'une position précédente,
- des moyens de détermination d'une droite courante qui est, selon la valeur de vitesse déterminée, soit une première droite définie par ladite position courante et ladite position précédente, soit une deuxième droite obtenue par approximation linéaire d'un ensemble comprenant au moins deux positions dont ladite position courante et ladite position précédente.

Selon un mode de réalisation, le dispositif selon l'invention comprend des moyens pour accéder à un réseau de télécommunication, lesdites positions géographiques étant déduites des positions géographiques d'un terminal mobile de télécommunication fournies par ce réseau.

Le dispositif selon l'invention est avantageusement intégré dans un terminal de télécommunication. De la sorte, il est possible d'estimer la trajectoire de toute entité mobile solidaire d'un tel terminal mobile. En variante, le dispositif selon l'invention est intégré dans un serveur de traitement de données connecté à un réseau de télécommunications via lequel sont obtenues les positions géographiques d'un terminal mobile accédant à ce réseau.

L'invention a également pour objet un support d'enregistrement comprenant un programme comportant des instructions de programme pour la mise en oeuvre des étapes du procédé selon l'invention lorsque ledit programme est chargé et exécuté dans un système informatique.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système adapté à la mise en oeuvre de l'invention,
- la figure 2 illustre certaines des étapes du procédé selon l'invention, et
- la figure 3 est un ordinogramme d'un mode de réalisation du procédé selon l'invention.

L'invention est décrite dans l'exemple particulier de sa mise en oeuvre au moyen d'un réseau de télécommunication cellulaire. En effet, une information de position du véhicule est aisément déduite d'une information sur la position géographique d'un terminal de télécommunication, placé dans ou sur le véhicule et accédant au réseau cellulaire. En effet, la position géographique d'un tel terminal est connue du réseau lorsque celui-ci accède au réseau et cette position géographique est donc susceptible d'être fournie par ce réseau.

Cependant l'invention est susceptible d'être mise en oeuvre au moyen de tout dispositif capable d'obtenir une information de position sur un véhicule à suivre.

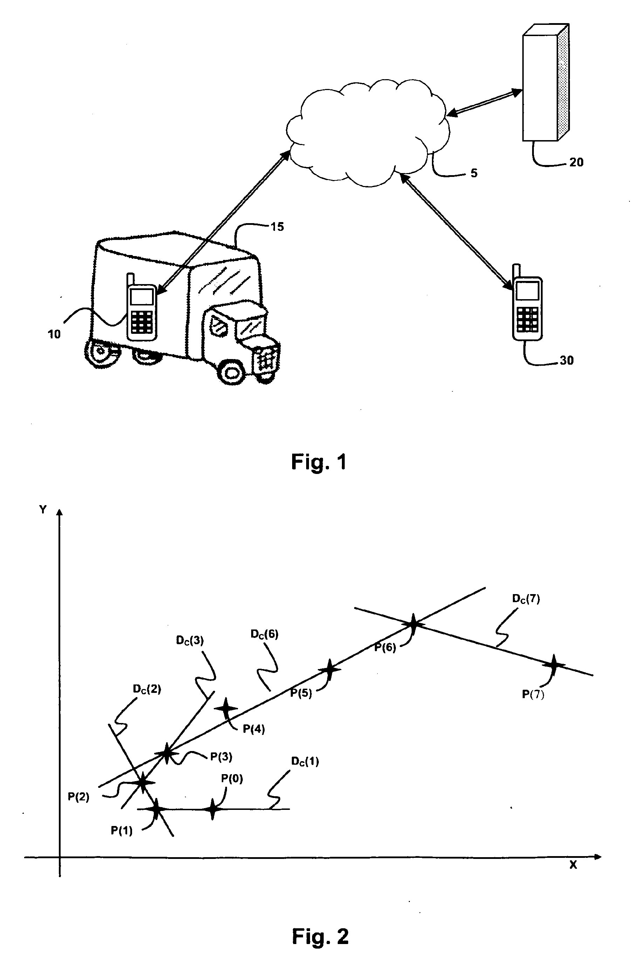

La figure 1 représente de manière schématique un système adapté à la mise en oeuvre de l'invention. Ce système comprend un réseau de télécommunication cellulaire 5, un premier terminal de télécommunication 10 accédant à ce réseau, un serveur 20 de traitement de données accédant à ce réseau, ainsi qu'un deuxième terminal de télécommunication 30 accédant à ce réseau. Dans le mode de réalisation décrit, le serveur 30 est un serveur de gestion de flotte de véhicules.

Le terminal 10 est placé dans ou sur un véhicule 15 pour lequel le suivi de trajectoire est effectué. Ce véhicule peut être tout type de véhicule: un véhicule automobile, un bateau, etc.

Tout dispositif accédant au réseau 5, notamment un des terminaux mobiles 10 ou 30 ou le serveur 20, est susceptible de mettre en oeuvre le procédé selon l'invention. Le procédé est en particulier adapté pour être mis en oeuvre dans un téléphone mobile.

Dans la suite de la description, les notations mathématiques suivantes sont utilisées pour les différentes variables:
- P(k): k^{ème} position géographique du véhicule 15, k entier, k∈[0,kₘₐₓ], mesurée dans un espace à deux dimensions, P(k)=(x(k),y(k));
- TP: tableau utilisé pour mémoriser une ou plusieurs positions géographiques successives du véhicule 15;
- V(k): vitesse du véhicule 15 entre les positions P(k) et P(k-1);
- VS(i): valeur de seuil de vitesse pour i entier, i∈[0,iₘₐₓ], ces valeurs étant telles que VS(i) < VS(i+1), ∀i∈[0,iₘₐₓ - 1];
- θ(i): valeur d'angle, mesurée en radian, associé à l'intervalle [VS(i), VS(i+1)[;
- Pₘₑₘ: point servant à mémoriser la dernière position géographique pour laquelle V(k) > VS(0);
- d(k): distance entre Pₘₑₘ et P(k);
- dₜₒₜₐₗ: distance totale parcourue entre P(0) et P(k);
- D_{c}(k): droite courante associée à P(k);
- D_{R}(k): droite obtenue par régression linéaire d'une partie des points contenus dans le tableau TP;
- D_{I}(k): droite, dite droite instantanée, définie par les points P(k) et P(k-1);
- α_{R}(k): valeur en angle de la pente de la droite D_{R}(k), mesurée par exemple en radians et appartenant à l'intervalle [0,2*π[;
- αᵢ(k): valeur en angle de la pente de la droite D_{I}(k), mesurée par exemple en radians et appartenant à l'intervalle [0,2*π[;

Les valeurs de seuil de vitesse VS(i) définissent une échelle de valeurs. Cette échelle de valeur est de préférence adaptée à la gamme de vitesses possibles pour le véhicule.

Par exemple: si le véhicule est une voiture susceptible de rouler de 0 à 180 km/h, l'échelle de valeurs de vitesse choisie va couvrir cette gamme. Les seuils de vitesse sont par exemple définis comme suit:
VS(0)= 5km/h
VS(1)= 10km/h
VS(2)= 30km/h
VS(3)= 50km/h
VS(4)= 90km/h
VS(5)= 130km/h
VS(6)= 180km/h

De préférence, les valeurs de seuil sont choisies d'autant plus rapprochées les unes des autres que la vitesse est faible, de manière à apporter plus de précision dans la méthode d'estimation de la trajectoire à de faibles vitesses du véhicule.

La méthode d'approximation utilisée dans le procédé selon l'invention suppose en effet la détection des changements de direction du véhicule et la définition de seuils de détection. Or plus un véhicule roule lentement, et plus la trajectoire qu'il effectue est susceptible de comporter des changements de direction rapides et amples. Par contre, à vitesse élevée, le véhicule n'effectue que des changements de direction progressifs et faibles en amplitude d'angle.

Les valeurs d'angle θ(i) associées à chaque intervalle [VS(i), VS(i+1)] sont donc choisies de manière à correspondre à l'angle maximal de changement de direction au-delà duquel l'approximation en segment de droite de la trajectoire du véhicule doit faire apparaître un changement de direction, c'est-à-dire un changement de la droite courante porteuse du segment courant.

Sur des parties de trajectoire comportant des changements de direction importants en amplitude, un nombre élevés de segments de droite sera nécessaire pour approximer correctement la trajectoire du véhicule. Sur toute la partie de la trajectoire où l'amplitude en angle du changement de direction reste en deçà de cette valeur, la trajectoire du véhicule pourra être approximée par un segment de droite unique.

Les valeurs d'angle associées sont choisies par exemple comme suit:
θ(0)= 30°
θ(1)= 25°
θ(2)= 20°
θ(3)= 10°
θ(4)= 5°
θ(5)= 2°

Le fait de corréler les valeurs maximales d'angle à la vitesse effective du véhicule, permet d'adapter la précision de l'approximation à la vitesse du véhicule. Seules les parties de trajectoires qui le nécessitent vont faire l'objet d'un degré élevé de précision dans l'approximation, par augmentation du nombre de segments de droites utilisés pour approximer la trajectoire. Les ressources en calcul et mémoire sont donc limitées à ce qui est nécessaire pour l'obtention d'une précision d'approximation donnée. Il en résulte un bon rapport précision / ressources.

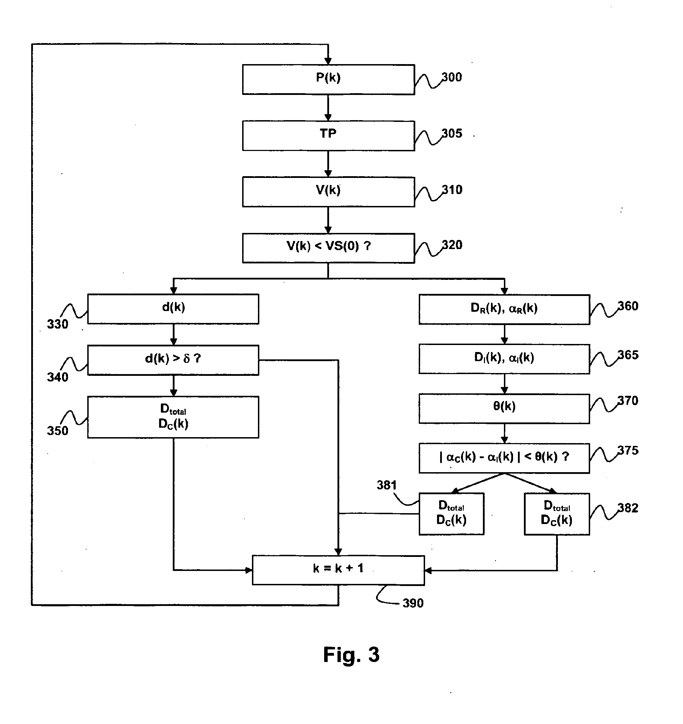

Les étapes 300 à 390 du procédé selon l'invention sont décrites plus en détail par référence à la figure 3. Le procédé s'exécute de manière itérative entre les étapes 300 et 390. En particulier, après obtention à l'étape 300 d'une nouvelle position géographique courante P(k), une droite courante D_{C}(k) associée à cette position courante P(k) est déterminée lors des étapes 305 à 382, cette droite courante étant fonction de cette position courante et d'au moins une des positions précédemment obtenues.

A l'initialisation du procédé, la valeur de la variable k est égale à zéro, le tableau TP est vide et les valeurs des différentes variables sont mises à zéro, notamment la valeur de dₜₒₜₐₗ.

A la première exécution de l'étape 300, une nouvelle position géographique P(0) est obtenue par un dispositif de mesure. Dans le mode de réalisation décrit, la position du véhicule 15 est la position géographique d'un terminal mobile 10 placé dans ou sur le véhicule 15, position telle que fournie par le réseau de télécommunication 5 auquel accède ce terminal mobile 10. Tout autre dispositif apte à fournir la position géographique du véhicule est également approprié.

Dans le mode de réalisation où c'est le serveur 20 qui met en oeuvre le procédé selon l'invention, la position du terminal 10 est transmise au serveur 20 à travers le réseau 5.

A l'étape 305 cette nouvelle position P(0) est mémorisée dans le tableau TP. Le point Pₘₑₘ est modifié en vue de la prochaine itération avec les coordonnées du point P(0).

Etant donné qu'il faut au minimum deux positions géographiques pour déterminer une droite courante, les étapes 310 à 382 ne sont exécutées que lorsqu'au moins deux positions géographiques ont été obtenues à l'étape 300. En conséquence, suite à la première exécution de l'étape 300, l'étape 390 finale est exécutée, étape lors de laquelle la valeur de la variable k est incrémentée d'une unité: k=1.

A la prochaine exécution de l'étape 300, ainsi qu'à toutes les suivantes, une nouvelle position géographique P(k) est obtenue. A l'étape 305 cette nouvelle position P(k) est mémorisée dans le tableau TP.

A l'étape 310, la valeur V(k) de vitesse de déplacement du véhicule entre ladite position courante P(k) et la position courante précédente P(k-1) est déterminée. Cette valeur de vitesse est obtenue en divisant la distance entre ces deux positions par l'intervalle de temps séparant la mesure de P(k) et de celle de P(k-1). Dans le cas où la mesure d'une position géographique du véhicule est espacée de la précédente d'un intervalle de temps constant, il suffit de connaître la valeur de cet intervalle de temps. Dans le cas contraire, il est nécessaire d'obtenir pour chaque position géographique une information d'horodatage de la mesure.

A l'étape 320 la valeur V(k) de vitesse déterminée à l'étape 310 est comparée avec la valeur de seuil VS(0). Si V(k) est inférieure à VS(0), on passe à l'étape 330, sinon, le point Pₘₑₘ est modifié en vue de la prochaine itération avec les coordonnées du point P(k), puis on passe à l'étape 360.

A l'étape 330, la distance d(k) entre P(k) et le point Pₘₑₘ est calculée.

A l'étape 340, on compare la distance d(k) avec un seuil δ correspondant à un seuil de précision sur les mesures des positions géographiques.

Si, à l'étape 340, la distance d(k) est inférieure (ou égale) à ce seuil δ, le nouveau point P(k) n'est pas pris en considération: aucune droite courante n'est déterminée et la distance totale parcourue dₜₒₜₐₗ est inchangée. On passe ensuite à l'étape 390.

Si, à l'étape 340, la distance d(k) est supérieure (ou égale) au seuil δ, la nouvelle droite courante est la droite définie par P(k) et Pₘₑₘ, la distance dₜₒₜₐₗ étant incrémentée de la valeur de d(k). Puis la position géographique P(k) est mémorisée dans Pₘₑₘ. On passe ensuite à l'étape 390.

A l'étape 360, exécutée suite à l'étape 330, on détermine la droite D_{R}(k) par régression linéaire des points contenus dans le tableau TP. On détermine ensuite la valeur α_{R}(k) en angle de la pente de cette droite D_{R}(k).

A l'étape 365, on détermine la droite D_{I}(k) définie par P(k) et P(k-1). On détermine ensuite la valeur α_{I}(k) en angle de la pente de cette droite D_{I}(k).

A l'étape 370, on détermine une valeur d'angle θ(k) associée à la valeur de vitesse V(k). Cette valeur d'angle est la valeur d'angle associée à l'intervalle [VS(i), VS(i+1)[ dans lequel se trouve la valeur de vitesse V(k) déterminée.

A l'étape 375, on compare la valeur absolue de la différence entre α_{R}(k) et α_{I}(k) avec la valeur θ(k) déterminée à l'étape 370. Cette comparaison permet de déterminer de quelle manière la trajectoire du véhicule va être approximée. Deux cas se présentent. Si la valeur absolue de la différence est inférieure à θ(k), on passe à l'étape 381. Si la valeur absolue de la différence est supérieure à θ(k), on passe à l'étape 382. En cas d'égalité entre la valeur absolue de la différence et θ(k), on exécute indifféremment l'étape 381 ou l'étape 382.

A l'étape 382, la distance dₜₒₜₐₗ est incrémentée de la valeur de la distance entre le premier point du tableau TP et le point P(k-1), la droite courante D(k) associée au point P(k) étant la droite passant par les points P(k) et P(k-1). Puis la position géographique P(k-1) est mémorisée dans Pₘₑₘ en vue d'une prochaine itération. Les points du tableau autres que P(k-1) et P(k) sont supprimés de ce tableau. On passe ensuite à l'étape finale 390.

A l'étape 381, la droite courante D(k) associée au point P(k) est la droite D_{R}(k) déterminée précédemment. La distance dₜₒₜₐₗ reste inchangée, elle ne sera mise à jour que lors d'une prochaine exécution de l'étape 382, 350 ou 390. On passe ensuite à l'étape finale 390.

A l'étape 390, la valeur de l'indice k de la position courante est incrémentée.

De préférence, lorsque cette valeur est supérieure à une valeur de seuil kₘₐₓ correspondant à la taille maximale du tableau TP, une partie au moins de la trajectoire correspondant aux points de TP est approximée par la droite définie par le premier et le dernier point de cette partie de la trajectoire, la distance dₜₒₜₐₗ étant incrémentée de la valeur de la distance entre le premier et le dernier point de cette partie de la trajectoire. Les points du tableau faisant partie de la trajectoire ayant fait l'objet de cette approximation sont ensuite supprimés du tableau TP, à l'exception du dernier point de cette partie de trajectoire.

Dans une variante simplifiée, si la valeur de k est supérieure à kₘₐₓ, seul le premier point du tableau TP sera supprimé à cette étape, la distance dₜₒₜₐₗ étant incrémentée de la valeur de la distance entre le premier et le deuxième point du tableau.

Suite à l'étape 390, le procédé reprend à l'étape 300 en vue de la prochaine itération.

La figure 2 illustre les différents cas de figure correspondant aux étapes qui viennent d'être décrites. Cette figure représente la trajectoire d'un véhicule dans un espace à deux dimensions x, y. Les différents positions obtenues sont notées P(0) à P(7).

Dans la première partie de la trajectoire formée par les points P(0) à P(3), le véhicule roule lentement et effectue un virage important vers la droite. Ce cas de figure correspond au cas V(k) < VS(0), la trajectoire étant approximée par des segments de droite définis chaque fois par le point courant et le point précédent.

Dans la deuxième partie de la trajectoire, entre les points P(3) et P(6), la trajectoire suivie par le véhicule est sensiblement rectiligne. Ce cas de figure correspond au cas de l'étape 382, la droite courante D_{C}(6) étant la droite obtenue par régression linéaire sur les points P(3) à P(6), la distance totale dₜₒₜₐₗ étant incrémentée pour prendre en compte cette partie de trajectoire par la distance entre les points P(3) et P(6).

Dans la troisième partie de la trajectoire, entre les points P(6) et P(7), le véhicule effectue un virage vers la droite de faible amplitude. Un changement de direction est détecté à partir du point P(6) du fait que l'angle entre la droite D_{R}(7) obtenue par régression linéaire sur l'ensemble des points P(3) à P(7) et la droite D_{I}(7) définie par les points P(6) et P(7) est supérieur à la valeur d'angle θ(7) associée à la vitesse V(7) du véhicule entre les points P(6) et P(7). Ce cas de figure correspond au cas de l'étape 381, la droite courante D_{C}(7) associée au point P(7) étant dans ce cas la droite D_{I}(7) définie par les points P(6) et P(7).

L'utilisation de la technique de régression linéaire permet d'approcher de manière simple un ensemble de point par une droite. L'utilisation de toute autre technique d'approximation linéaire (par exemple une autre méthode de régression) d'un ensemble de point est envisageable.

Les droites courantes obtenues permettent de reconstituer facilement la trajectoire du véhicule sous forme d'une succession de segment de droites appartenant à ces droites. Il suffit de calculer les points d'intersection entre ces droites pour déterminer précisément le début et la fin du segment ou d'approcher ces points d'intersections à partir des positions géographiques obtenues. L'intersection entre les droites D_{C}(7) et D_{C}(6) représentées à la figure 2 est par exemple approximée par la position géographique P(6).

Selon une implémentation préférée, les différentes étapes du procédé selon l'invention sont mises en oeuvre au moyen d'instructions de programmes d'ordinateurs et exécutées par un processeur de données du terminal 10 ou 30 ou du serveur 20, processeur faisant appel à des programmes ou sous-programmes conçus pour l'exécution des différentes étapes de ce procédé.

En conséquence, l'invention vise aussi un programme d'ordinateur sur un support d'informations, ce programme étant susceptible d'être mis en oeuvre dans un ordinateur ou par un processeur de données, ce programme comportant des instructions adaptées à la mise en oeuvre d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Avantageusement, les données générées par le procédé (distance parcourue et/ou vitesse de déplacement et/ou paramètres des droites courantes déterminées) sont transférées à travers un réseau de télécommunication vers un serveur de gestion de flotte de véhicule en vue d'une exploitation de ces données. Dans ce cas, le dispositif mettant en oeuvre le procédé selon l'invention comprend de préférence des moyens de télécommunications à travers un réseau de télécommunication et des moyens pour transférer ces données vers un serveur ou un autre terminal du réseau de télécommunication 5.

L'invention est applicable au suivi de véhicules, automobiles ou autres. Elle est applicable au suivi d'une flotte de véhicule.

Le procédé selon l'invention est particulièrement simple à mettre en oeuvre et est facilement intégrable dans un terminal mobile. Il est en outre susceptible d'être proposé en tant que service de base dans un réseau cellulaire tel que le réseau UMTS (Universal Mobile Telecommunication System). Dans ce cas, la mise en oeuvre du procédé peut également s'effectuer dans un serveur d'un opérateur de ce réseau ayant accès aux informations de localisation des mobiles gérées au sein de réseau, un utilisateur du réseau ayant accès aux données résultant de ce suivi (distance parcourue, vitesse de déplacement et paramètres des droites courantes déterminées) par connexion à ce serveur ou par réception de messages courts (SMS, Short Message Service) sur son terminal de télécommunication mobile.

## Revendications

1. Procédé d'estimation d'une trajectoire décrite par un objet mobile (15), à partir d'une succession de positions géographiques obtenues pour ledit objet, le procédé comprenant,
- une étape de détermination d'une valeur (V(k)) de vitesse de déplacement dudit objet à partir d'une position courante (P(k)) et d'une position précédente (P(k-1)),
- une étape de détermination d'une droite courante (D_{C}(k)) qui est, selon la valeur de vitesse déterminée, soit une première droite (D_{I}(k)) définie par ladite position courante et ladite position précédente, soit une deuxième droite (D_{R}(k)) obtenue par approximation linéaire d'un ensemble comprenant au moins deux positions dont ladite position courante et une position précédente.

2. Procédé selon la revendication 1, dans lequel, lorsque la valeur de vitesse déterminée est supérieure à un premier seuil de vitesse (VS(0)), le procédé comprend une étape de détermination d'une valeur d'angle (θ(k)) associée à la valeur de vitesse et d'une différence d'angle de pente entre la première et la deuxième droite, la droite courante correspondant à la deuxième droite lorsque ladite différence est inférieure à la valeur d'angle déterminée et à la première droite lorsque ladite différence est supérieure à la valeur d'angle associée.

3. Procédé selon la revendication 2, comprenant une étape initiale de définition d'une échelle de valeurs (VS(i)) de seuil de vitesse de déplacement dudit objet et d'une valeur d'angle (θ(i)) associée à chaque intervalle ([VS(i), VS(i+1)[) de valeurs de vitesse séparant deux valeurs de seuil successives,
la valeur d'angle déterminée (θ(k)) étant constituée par la valeur d'angle (θ(i)) associée à l'intervalle de valeurs de seuil dans lequel se trouve la valeur de vitesse (V(k)) déterminée.

4. Procédé selon l'une quelconque des revendications 2 à 3, dans lequel, lorsque la valeur de vitesse déterminée est inférieure au premier seuil de vitesse (VS(0)), la droite courante est la première droite.

5. Procédé selon l'une quelconque des revendications 1 à 4, lesdites positions géographiques étant déduites des positions géographiques d'un terminal mobile de télécommunication fournies par un réseau de télécommunication auquel accède ledit terminal.

6. Dispositif d'estimation d'une trajectoire décrite par un objet (15), à partir d'une succession de positions géographiques obtenues pour ledit objet, le dispositif comprenant,
- des moyens de détermination d'une valeur (V(k)) de vitesse de déplacement dudit objet à partir d'une position courante (P(k)) et d'une position précédente (P(k-1)),
- des moyens de détermination d'une droite courante (D_{C}(k)) qui est, selon la valeur de vitesse déterminée, soit une première droite (D_{I}(k)) définie par ladite position courante et ladite position précédente, soit une deuxième droite (D_{R}(k)) obtenue par approximation linéaire d'un ensemble comprenant au moins deux positions dont ladite position courante et ladite position précédente.

7. Dispositif selon la revendication 6, comprenant des moyens pour accéder à un réseau de télécommunication, lesdites positions géographiques étant déduites des positions géographiques d'un terminal mobile de télécommunication fournies par ce réseau.

8. Terminal (10, 30) de télécommunication comprenant un dispositif selon la revendication 7.

9. Serveur (20) de traitement de données, comprenant un dispositif selon la revendication 7, le dispositif étant connecté audit réseau de télécommunications et apte à recevoir via ledit réseau lesdites positions géographiques dudit terminal mobile de télécommunication.

10. Support d'enregistrement comprenant un programme comprenant des instructions de programme pour la mise en oeuvre des étapes du procédé selon l'une quelconque des revendications 1 à 5 lorsque ledit programme est chargé et exécuté dans un système informatique.

## Claims

1. Method for estimating a trajectory described by a mobile object (15), on the basis of a succession of geographical positions obtained for said object, the method comprising,
- a step of determining a value (V(k)) of speed of displacement of said object on the basis of a current position (P(k)) and of a previous position (P(k-1)),
- a step of determining a current straight line (D_{C}(k)) which is, according to the speed value determined, either a first straight line (D₁(k)) defined by said current position and said previous position, or a second straight line (D_{R}(k)) obtained by linear approximation of a set comprising at least two positions, including said current position and a previous position.

2. Method according to Claim 1, in which, when the determined speed value is greater than a first speed threshold (VS(0)), the method comprises a step of determining an angle value (θ(k)) associated with the speed value and a difference in angle of slope between the first and the second straight line, the current straight line corresponding to the second straight line when said difference is less than the determined angle value and to the first straight line when said difference is greater than the associated angle value.

3. Method according to Claim 2, comprising an initial step of defining a scale of threshold values (VS(i)) of speed of displacement of said object and of an angle value (θ(i)) associated with each interval ([VS(i), VS(i+1)]) of speed values separating two successive threshold values,
the determined angle value (θ(k)) being constituted by the angle value (θ(i)) associated with the interval of threshold values in which the determined speed value (V(k)) lies.

4. Method according to any one of Claims 2 to 3, in which, when the determined speed value is less than the first speed threshold (VS(0)), the current straight line is the first straight line.

5. Method according to any one of Claims 1 to 4, said geographical positions being deduced from the geographical positions of a mobile telecommunication terminal which are provided by a telecommunication network accessed by said terminal.

6. Device for estimating a trajectory described by an object (15), on the basis of a succession of geographical positions obtained for said object, the device comprising,
- means for determining a value (V(k)) of speed of displacement of said object on the basis of a current position (P(k)) and of a previous position (P(k-1)),
- means for determining a current straight line (D_{C}(k)) which is, according to the speed value determined, either a first straight line (D_{I}(k)) defined by said current position and said previous position, or a second straight line (D_{R}(k)) obtained by linear approximation of a set comprising at least two positions, including said current position and said previous position.

7. Device according to Claim 6, comprising means for accessing a telecommunication network, said geographical positions being deduced from the geographical positions of a mobile telecommunication terminal which are provided by this network.

8. Telecommunication terminal (10, 30) comprising a device according to Claim 7.

9. Data processing server (20), comprising a device according to Claim 7, the device being connected to said telecommunications network and able to receive via said network said geographical positions of said mobile telecommunication terminal.

10. Recording medium comprising a program comprising program instructions for implementing the steps of the method according to any one of Claims 1 to 5 when said program is loaded into and executed in a computer-based system.

## Patentansprüche

1. Verfahren zur Schätzung einer von einem beweglichen Gegenstand (15) beschriebenen Bahn ausgehend von einer Folge von für den Gegenstand erhaltenen geographischen Positionen, wobei das Verfahren enthält
- einen Schritt der Bestimmung eines Geschwindigkeitswerts (V(k)) der Bewegung des Gegenstands ausgehend von einer laufenden Position (P(k)) und von einer vorhergehenden Position (P(k-1)),
- einen Schritt der Bestimmung einer laufenden Geraden (D_{C}(k)), die gemäß dem bestimmten Geschwindigkeitswert entweder eine erste Gerade (D_{I}(k)), die durch die laufende Position und die vorhergehende Position bestimmt wird, oder eine zweite Gerade (D_{R}(k)) ist, die durch lineare Annäherung einer Einheit erhalten wird, die mindestens zwei Positionen enthält, darunter die laufende Position und eine vorhergehende Position.

2. Verfahren nach Anspruch 1, bei dem, wenn der bestimmte Geschwindigkeitswert höher als eine erste Geschwindigkeitsschwelle (VS(0)) ist, das Verfahren einen Schritt der Bestimmung eines dem Geschwindigkeitswert zugeordneten Winkelwerts (θ(k)) und einer Neigungswinkeldifferenz zwischen der ersten und der zweiten Geraden enthält, wobei die laufende Gerade der zweiten Geraden entspricht, wenn die Differenz geringer als der bestimmte Winkelwert ist, und der ersten Geraden entspricht, wenn die Differenz höher als der zugeordnete Winkelwert ist.

3. Verfahren nach Anspruch 2, das einen Anfangsschritt der Definition einer Werteskala (VS(i)) einer Geschwindigkeitsschwelle der Bewegung des Gegenstands und eines Winkelwerts (θ(i)) enthält, der jedem Intervall ([VS(i), VS(i+1) [) von Geschwindigkeitswerten zugeordnet ist, der zwei aufeinanderfolgende Schwellwerte trennt,
wobei der bestimmte Winkelwert (θ(k)) aus dem Winkelwert (θ(i)) besteht, der dem Intervall von Schwellwerten zugeordnet ist, in dem sich der bestimmte Geschwindigkeitswert (V(k)) befindet.

4. Verfahren nach einem der Ansprüche 2 bis 3, bei dem, wenn der bestimmte Geschwindigkeitswert geringer als die erste Geschwindigkeitsschwelle (VS(0)) ist, die laufende Gerade die erste Gerade ist.

5. Verfahren nach einem der Ansprüche 1 bis 4, wobei die geographischen Positionen von den geographischen Positionen eines mobilen Telekommunikations-Endgeräts abgeleitet werden, die von einem Telekommunikationsnetz geliefert werden, auf das das Endgerät Zugriff hat.

6. Vorrichtung zur Schätzung einer von einem Gegenstand (15) beschriebenen Bahn ausgehend von einer Folge von für den Gegenstand erhaltenen geographischen Positionen, wobei die Vorrichtung enthält
- Einrichtungen zur Bestimmung eines Geschwindigkeitswerts (V(k)) der Bewegung des Gegenstands ausgehend von einer laufenden Position (P(k)) und von einer vorhergehenden Position (P(k-1)),
- Einrichtungen zur Bestimmung einer laufenden Geraden (D_{C}(k)), die gemäß dem bestimmten Geschwindigkeitswert entweder eine erste Gerade (D_{I}(k)), die von der laufenden Position und der vorhergehenden Position bestimmt wird, oder eine zweite Gerade (D_{R}(k)) ist, die durch lineare Annäherung einer Einheit erhalten wird, die mindestens zwei Positionen enthält, darunter die laufende Position und die vorhergehende Position.

7. Vorrichtung nach Anspruch 6, die Einrichtungen für den Zugriff auf ein Telekommunikationsnetz enthält,
wobei die geographischen Positionen von den geographischen Positionen eines mobilen Telekommunikations-Endgeräts abgeleitet werden, die von diesem Netz geliefert werden.

8. Telekommunikations-Endgerät (10, 30), das eine Vorrichtung nach Anspruch 7 enthält.

9. Datenverarbeitungsserver (20), der eine Vorrichtung nach Anspruch 7 enthält, wobei die Vorrichtung mit dem Telekommunikationsnetz verbunden und fähig ist, über das Netz die geographischen Positionen des mobilen Telekommunikations-Endgeräts zu empfangen.

10. Aufzeichnungsträger, der ein Programm enthält, das Programmanweisungen für die Durchführung der Schritte des Verfahrens nach einem der Ansprüche 1 bis 5 enthält, wenn das Programm in ein Datenverarbeitungssystem geladen und dort ausgeführt wird.
